Europäisches Patentamt

European Patent Office

Office européen des brevets

(11) Numéro de publication: **0 356 295**

**A1**

## DEMANDE DE BREVET EUROPEEN

(21) Numéro de dépôt: **89402226.8**

(22) Date de dépôt: **07.08.89**

(51) Int. Cl.⁵: **B 60 P 3/355**

(30) Priorité: **12.08.88 FR 8810884**
**15.06.89 FR 8907956**

(43) Date de publication de la demande:
**28.02.90 Bulletin 90/09**

(84) Etats contractants désignés:
**AT BE CH DE ES FR GB GR IT LI LU NL SE**

(71) Demandeur: **ESTEREL INTERNATIONAL, Société Anonyme**
**Route de Gournay**
**F-76160 Darnetal (FR)**

(72) Inventeur: **Dufrancatel, Michel**
**14, Rue Auguste Borgnet**
**F-76130 Mont Saint Aignan (FR)**

(74) Mandataire: **Derambure, Christian**
**BUGNION ASSOCIES 55, rue Boissonade**
**F-75014 Paris (FR)**

(54) **Caravane de type pliante-rigide, comprenant un ou plusieurs meubles de rangement de toit.**

㋧ Caravane de type pliante-rigide, comprenant un châssis, de 5 roues (1), un attelage (2), un caisson (3) fixé au châssis, constitué d'un plancher (4) et de quatre panneaux verticaux et inférieurs (5), (6) et (7) ; quatre panneaux supérieurs (8), (9) et (10) articulés (11) à pivotement par leurs bords horizontaux inférieurs aux bords horizontaux supérieurs libres respectifs des panneaux (5, 6, 7) ; et un toit (12) formant un caisson supérieur aplati ouvert (16) vers le bas associé, en permanence grâce à des moyens (13) d'association mécanique à coulissement aux bords horizontaux supérieurs (14) des panneaux (8, 9), caractérisée en ce que des meubles de rangement de toit (26) sont fixés au toit (12) et des moyens de liaison relient les deux panneaux supérieurs (8, 9) pour assurer et maintenir en permanence leur déplacement synchrone et leur symétrie par rapport à un plan Q.

FIG. 2

EP 0 356 295 A1

Bundesdruckerei Berlin

Description

## CARAVANE DE TYPE PLIANTE-RIGIDE. COMPRENANT UN OU PLUSIEURS MEUBLES DE RANGEMENT DE TOIT

L'invention concerne une caravane de type pliante-rigide, comprenant un ou plusieurs meubles de rangement de toit.

On connaît déjà une caravane de type pliante-rigide (voir documents FR-2 284 480, FR-2 256 055 et EP-0 036 817) comprenant un châssis pourvu de roues et d'un attelage ; un caisson inférieur ouvert vers le haut fixé au châssis, constitué d'un plancher et de quatre panneaux verticaux et inférieurs, respectivement avant, arrière et latéraux ; quatre panneaux supérieurs, respectivement avant, arrière et latéraux articulés à pivotement par leurs bords horizontaux inférieurs aux bords horizontaux supérieurs libres respectifs des panneaux inférieurs; et un toit formant un caisson supérieur aplati ouvert vers le bas associé, en permanence, grâce à des moyens d'association mécaniques, à coulissement aux bords horizontaux supérieurs des panneaux supérieurs avant et arrière, de manière que le toit soit supporté et déplacé grâce aux dits panneaux supérieurs avant et arrière.

Une telle caravane se trouve soit à l'état plié, soit à l'état déplié. A l'état plié, les quatre panneaux supérieurs sont placés horizontalement, pratiquement dans le même plan, et le toit repose sur le caisson inférieur. Cet état plié correspond à celui utilisé pour le garage de la caravane ou son déplacement. A l'état déplié, les quatres panneaux supérieurs sont placés verticalement, dans le prolongement des quatre panneaux verticaux et inférieurs du caisson inférieur. Dans ce cas, le toit est écarté du caisson inférieur et se trouve dans sa position extrême supérieure. La caravane est mise en volume et peut être utilisée pour le logement.

Selon des formes de réalisation bien connues (voir document FR-2 284 480), le coulissement des bords horizontaux supérieurs des panneaux supérieurs avant et arrière sur le toit est réalisé par exemple au moyen de galets portés par les panneaux supérieurs avant et arrière au voisinage de leurs bords horizontaux supérieurs et sur leurs bords latéraux, lesquels galets roulent en étant guidés dans des profilés de guidage fixés aux faces tombantes verticales et longitudinales du toit.

On a proposé divers perfectionnements à de telles structures de base de caravane. Un premier perfectionnement a concerné la mise en place de moyens élastiques unidirectionnels tels que des vérins à air comprimé entre le caisson inférieur et les panneaux supérieurs avant et arrière, lesquels moyens élastiques unidirectionnels sollicitent ces panneaux supérieurs avant et arrière en position verticale et donc les composants mobiles de la caravane dans leur position correspondant à l'état déplié de celle-ci. De tels moyens élastiques unidirectionnels constituent une aide au déploiement de la caravane compte-tenu du poids représenté par les panneaux supérieurs avant et arrière et le toit. Diverses variantes de réalisation quant à l'emplacement de tels moyens élastiques unidirectionnels ont été proposées et sont bien connues de l'homme du métier (à l'extérieur, à l'intérieur ou dans l'épaisseur même des parois de la caravane).

Selon un autre perfectionnement (document EP-0 036 817) on a proposé des aménagements spécifiques d'une telle caravane pliante-rigide, aménagements pliables mais cependant aptes à permettre une utilisation efficiente lorsque la caravane est à l'état déplié.

On a également proposé, depuis longtemps, d'inclure des éléments de rangement dans le toit (voir notamment document EP-0 206 302).

Selon un autre perfectionnement (document FR-2 412 440) on a également proposé d'inclure dans une telle caravane des moyens moteurs aptes à motoriser le pliage et le dépliage de la caravane (document FR-2 412 440).

De nombreux autres projets de réalisation de caravane pliante ont été proposés mais la plupart n'ont pas connu un succès commercial notable et/ou durable (voir par exemple le document FR-2 049 376).

Le mode de réalisation qui s'est commercialement imposé est celui conforme à la structure précédemment mentionnée dans lequel le dépliage de la caravane pour la faire passer de l'état plié à l'état déplié est celui représenté sur le document FR-2 284 480 : on commence par faire pivoter vers le haut l'un des panneaux supérieurs d'extrémité, le toit reposant à l'extrémité opposé sur le caisson inférieur. Puis, lorsque ce panneau supérieur d'extrémité est en position verticale, on fait pivoter l'autre panneau supérieur d'extrémité jusqu'à l'amener à son tour en position verticale. Ainsi, dans une première étape, le toit est incliné puis est ramené dans une deuxième étape en position horizontale. Ce principe de fonctionnement est également celui décrit dans le document EP-0 206 302.

On a également décrit des fonctionnements de pliage-dépliage de caravane dans lesquels le toit reste en position horizontale entre l'état plié et l'état déplié ou inversement. Tel est le cas du document FR- 2 509 674. Toutefois, ce document concerne une structure de caravane totalement différente de celle mentionnée précédemment, dans laquelle les panneaux supérieurs avant, arrière sont montés coulissants verticalement et non pivotants. Tel est également le cas du document FR-2 412 440 dont le but essentiel est de diminuer l'effort nécessaire au relevage des panneaux supérieurs avant et arrière. On peut se référer également au document US-4 448 453. Une caravane telle que celle décrite dans le document FR-2 412 440 ne permet pas, de surcroît, d'inclure des meubles dans le toit notamment parce que les organes de manoeuvre du toit sont fixés à ce dernier ce qui empêche le logement d'éléments de rangement.

Une caravane telle que celle décrite dans le document EP-0 206 902 est de structure et de fonctionnement classiques, ainsi qu'il a été décrit précédemment et il lui est simplement adjoint des meubles de rangement de toit connus en soi.

Cependant, une telle structure a comme inconvénient que lors du pliage ou du dépliage de la caravane, le toit est incliné ce qui a comme conséquence que le contenu des placards de toit peut être déplacé, renversé, bouleversé, cassé, etc... Pour remédier à cet inconvénient, on peut soit cloisonner transversalement les placards de toit, soit encore les vider pour les opérations de pliage et de dépliage. Le cloisonnement des placards de toit est d'une part peu pratique et d'autre part accroît le coût et le poids du toit ce qui est plutôt un inconvénient. Quant à la solution qui consiste à vider les placards de pavillon pour les opérations de pliage et dépliage, elle est à l'évidence mal commode. De plus selon le document EP-0 206 902 il ne serait pas souhaitable d'avoir une caravane de type pliante-rigide dans laquelle le toit est déplacé par simple coulissement vertical car cette structure présenterait de nombreux inconvénients.

L'invention a donc pour objectif de résoudre le problème de la stabilité du contenu des placards de toit d'une caravane pliante-rigide qui serait du type mentionné précédemment c'est-à-dire avec un caisson inférieur et quatre panneaux supérieurs articulés dont deux supportent le toit formant caisson.

Selon l'état de la technique connu de l'homme du métier, une caravane de type pliante-rigide doit être réalisée par mouvement du toit selon un double pivotement et non un simple coulissement vertical. Cela est confirmé par le document EP-0 206 902 ainsi que les données commerciales connues. De plus et simultanément, l'homme du métier est enclin : à diminuer l'épaisseur du toit, de manière que la caravane à l'état plié ait l'encombrement vertical minimal ; à alléger le toit pour faciliter sa manoeuvre ; et à éviter la présence d'organes "techniques" à proximité d'organes, pièces ou parties utilitaires, décoratives ou de confort.

A cet effet, une caravane du type mentionné précédemment est telle que, en combinaison, d'une part, un ou plusieurs meubles de rangement de toit sont fixés rigidement de façon inamovible au toit et, d'autre part, des moyens de liaison relient, directement ou indirectement, les deux panneaux supérieurs avant et arrière pour assurer et maintenir en permanence en premier lieu leur déplacement synchrone et, en second lieu, leur symétrie par rapport à un plan médian vertical transversal.

Grâce aux moyens constitutifs de l'invention, les meubles de rangement de toit sont en permanence horizontaux, que la caravane soit dépliée ou pliée ou dans toute situation intermédiaire. Cela a pour avantage d'éviter que le contenu de ces meubles de rangement de toit ne soit renversé, déplacé, cassé, etc...

Les autres caractéristiques de l'invention résulteront de la description qui suivra, en référence aux dessins annexés dans lesquels :

- Les figures 1a, 1b, 1c, 1d, 1e, 1f et 1g sont des vues schématiques, de côté, d'une caravane selon l'invention, montrant diverses étapes du dépliage et du pliage.

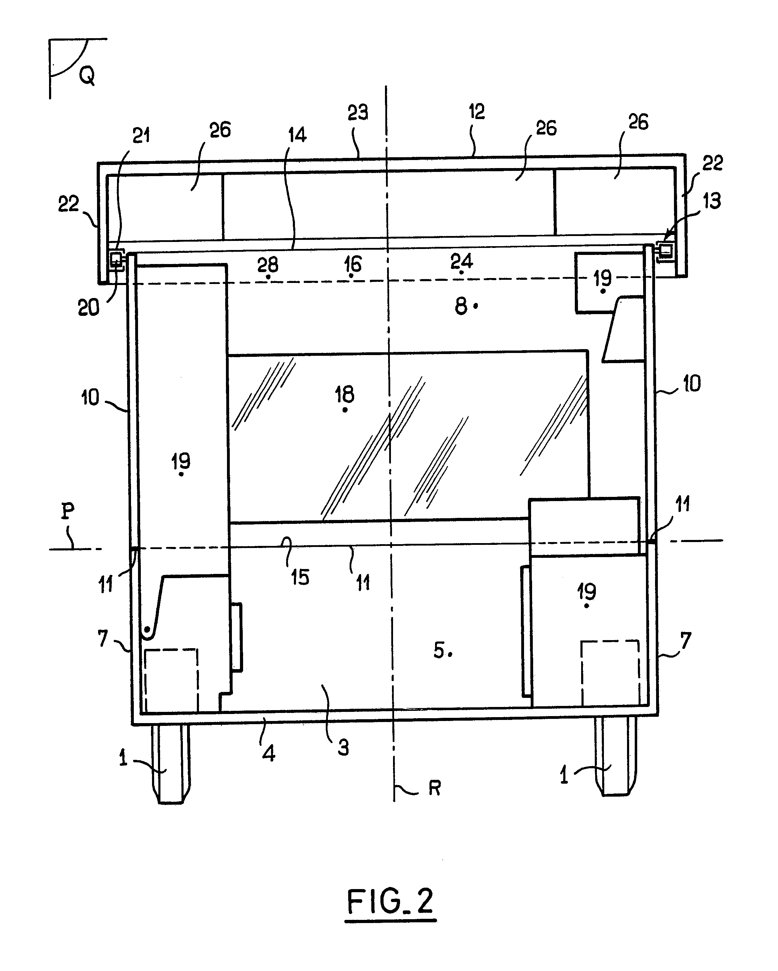

- La figure 2 est une vue schématique, à plus grande échelle, en coupe par un plan vertical transversal d'une caravane selon l'invention.

- La figure 3 est une vue partielle, seulement schématique, illustrant une variante de réalisation de l'invention dans laquelle les moyens de liaison n'assurent que la liaison fonctionnelle entre les panneaux supérieurs avant et arrière permettant d'assurer leur synchronisme et leur symétrie.
- La figure 4 est une vue schématique en coupe par un plan transversal, à plus grande échelle, illustrant une autre variante de l'invention dans laquelle les moyens de liaison et les moyens d'association mécaniques sont combinés.
- la figure 5 est une vue partielle en sens longitudinal de la variante de la figure 4, selon la flèche F.
- La figure 6 est une vue schématique, de côté d'une forme de réalisation constituant une variante de la figure 3, la vue étant partielle et limitée essentiellement aux moyens de liaison.
- La figure 7 est une vue également schématique et partielle, de dessus de la figure 6.
- La figure 8 est une vue de détail de la figure 7 à plus grande échelle, montrant également les moyens d'association mécaniques à coulissement.
- La figure 9 est une vue de détail, de côté, de la figure 8 illustrant une variante possible concernant la position relative des moyens de liaison et d'association à coulissement.
- La figure 10 est une vue schématique en élévation d'une autre forme de réalisation.
- La figure 11 est une vue en coupe transversale par un plan vertical transversal, selon la ligne VII-VII de la figure 10.
- Les figures 12, 13 et 14 sont trois vues schématiques en coupe transversale illustrant différentes variantes concernant les deux ensembles latéraux de la caravane, de la précédente forme de réalisation.

L'invention concerne une caravane de type pliante-rigide. Une telle caravane comprend, de façon connue en soi, un châssis pourvu de roues 1 et d'un attelage 2 ; un caisson inférieur limité par un contour au moins sensiblement parallélépipédique, ouvert vers le haut, fixé au châssis, constitué d'un plancher 4 et de quatre panneaux verticaux (ou sensiblement) et inférieurs respectivement avant 5, arrière 6 et latéraux 7 ; quatre panneaux supérieurs respectivement avant 8, arrière 9 et latéraux 10, articulés à pivotement par leurs bords horizontaux inférieurs aux bords horizontaux supérieurs libres respectifs des panneaux inférieurs 5, 6, 7, par des charnières d'axe 11 ; et un toit 12 formant un caisson supérieur aplati, ouvert vers le bas, associé en permanence, grâce à des moyens d'association mécaniques à coulissement 13, aux bords horizontaux supérieurs 14 des panneaux supérieurs avant et arrière 8, 9 de manière que le toit 12 soit supporté et déplacé grâce aux panneaux supérieurs avant et arrière 8, 9.

Le caisson inférieur 3 comporte une ouverture supérieure 15 limitée par les charnières d'axe 11 placées au moins sensiblement dans un plan P au moins sensiblement horizontal. Le toit 12 comporte une ouverture inférieure 16 permettant le passage des panneaux supérieurs 8, 9, 10.

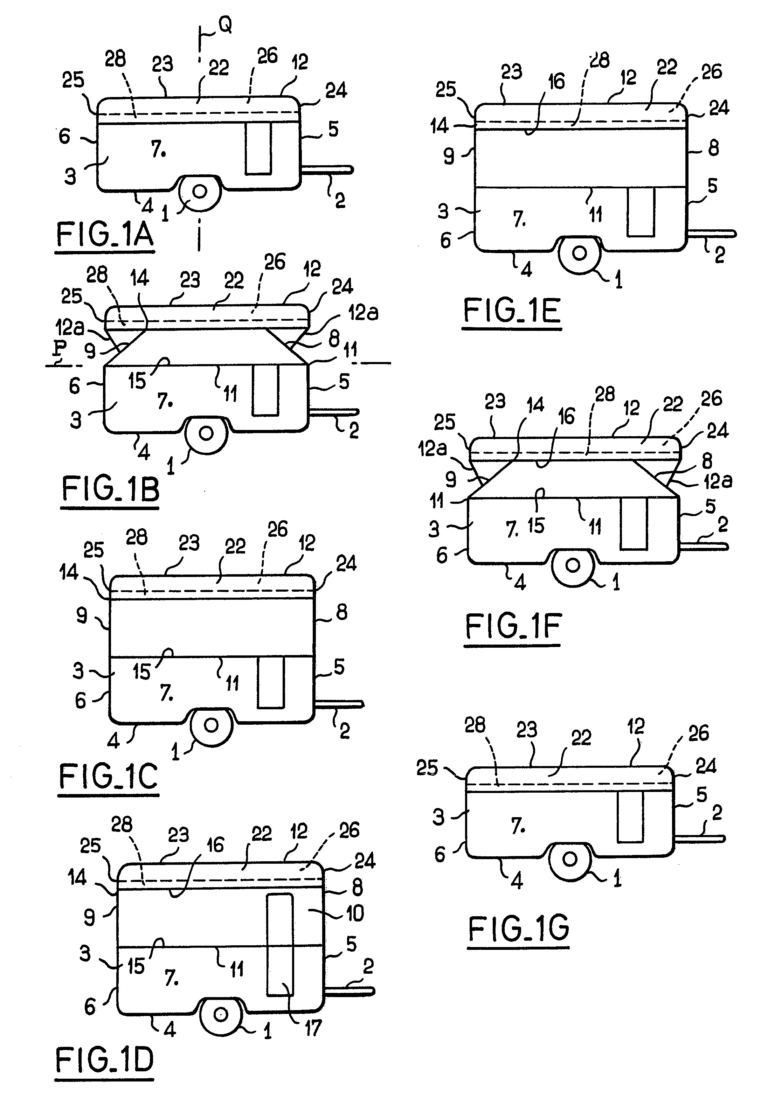

Une telle caravane peut se trouver dans deux états extrêmes à savoir l'état totalement plié (figures 1a et 1g) et l'état totalement déplié (figure 1d). A l'état plié, les panneaux supérieurs 8, 9, 10 sont sensiblement horizontaux et coplanaires dans le plan P, le toit 12 reposant sur le caisson inférieur 3, les ouvertures 15 et 16 étant alors pratiquement confondues. A l'état déplié, les panneaux supérieurs 8, 9, 10 sont placés verticalement dans les prolongements respectifs des panneaux inférieurs correspondants 5, 6, 7. Et, le toit 12 repose sur les panneaux 8, 9, 10, en étant alors le plus écarté du caisson inférieur 3.

La caravane comporte également une porte 17 ; une ou généralement plusieurs fenêtres 18 ; et un aménagement intérieur 19 comportant le plus souvent plusieurs meubles tels qu'un meuble formant soubassement, un meuble formant penderie, un meuble formant banquette, meuble formant table, etc...

On entend dans la présente demande par côté avant de la caravane, le côté de la caravane où se trouve l'attelage 2. Le côté arrière de la caravane est alors le côté opposé à celui où se trouve l'attelage 2. Les faces latérales définies par les panneaux latéraux 7, 10 ont en générale une longueur en sens horizontal plus grande que celle des faces transversales définies par les panneaux 5, 8 d'une part, 6, 9 d'autre part. la porte 17 se trouve généralement sur l'une des faces latérales. L'axe des roues 1 est transversal c'est-à-dire qu'il s'étend sensiblement perpendiculairement à la direction de l'attelage 2 et perpendiculairement aux panneaux latéraux inférieurs 7.

Les moyens d'association mécaniques à coulissement 13 peuvent comporter, par exemple, des galets 20, portés par les panneaux avant, arrière 8, 9 au voisinage de la jonction de leurs bords horizontaux supérieurs 14 et de leurs bords latéraux, lesquels galets 20 coopèrent avec des rails 21 de support et de guidage fixés aux faces tombantes latérales 22 du toit 12.

Enfin, le toit 12 comporte un plafond 23, les deux faces tombantes latérales 22 et deux faces tombantes avant et arrière 24, 25.

Une telle structure de caravane est connue de l'homme du métier et pour cette raison n'a pas à être décrite plus en détail.

Selon l'invention, une caravane de type pliante-rigide, telle qu'elle vient d'être décrite, est telle que, en combinaison, d'une part, un ou plusieurs meubles de rangement de toit 26 sont fixés rigidement, au toit 12. Et, d'autre part, cette caravane comporte des moyens de liaison 27 reliant, directement ou indirectement, les deux panneaux supérieurs avant et arrière 8, 9 pour assurer et maintenir en permanence, en premier lieu leur déplacement synchrone et, en second lieu, leur symétrie par rapport à un plan vertical transversal médian Q (passant sensiblement par l'axe des roues 1).

Préférentiellement, une telle caravane comporte également des compas d'équilibrage du toit 12a, articulés au toit 12 et aux panneaux supérieurs avant, arrière 8, 9.

La disposition constructive selon l'invention a pour effet qu'une telle caravane pliante-rigide comporte des meubles de rangement de toit 26, lesquels sont en permanence horizontaux, de même que le toit 12, que la caravane soit à l'état déplié ou à l'état plié ou dans toute situation intermédiaire. L'avantage qui découle de cet effet est d'éviter que le contenu des meubles de rangement de toit 26 ne soit déplacé, renversé, cassé, etc...

Les meubles de rangement de toit 26 se présentent, une fois montés dans le toit 12, sous forme de caissons fixés à toutes ou certaines des faces tombantes 22, 24, 25 du toit 12 notamment en étant adjacents au plafond 23. Pour permettre la coopération du toit 12 avec les panneaux supérieurs 8, 9, 10, les meubles de rangement de toit 26 sont écartés de l'ouverture inférieure 16 du toit 12 en laissant sur les faces tombantes correspondantes 22, 24, 25 des zones libres 28 adjacentes à l'ouverture inférieure 16.

Les meubles de rangement de toit 26 peuvent faire l'objet de nombreuses variantes de réalisation : ils peuvent être inamovibles ou, au contraire, être amovibles. Ils peuvent être fixés sur la totalité de la périphérie du toit 12 ou, au contraire, être sectorisés dans certaines parties du toit. Ils peuvent comporter des portes coulissantes ou pivotantes ou, au contraire, être dépourvus de porte. Ils peuvent comporter des étagères ou d'autres accessoires de rangement. Ils peuvent enfin comporter des cloisons transversales intérieures bien que celles-ci ne soient pas strictement indispensables au maintien du contenu des meubles 26, ceux-ci restant horizontaux.

Les moyens de liaison 27 sont préférentiellement associés à ou voisins des bords supérieurs 14 des panneaux supérieurs avant et arrière 8, 9, et logés dans le toit 12 notamment le long de ses faces tombantes 22, 24, 25.

On se réfère maintenant aux figures 1a à 1g qui illustrent, de façon schématique, le passage d'une caravane telle qu'elle vient d'être décrite de l'état plié à l'état déplié et inversement de ce dernier état à l'état plié. Initialement (figure 1a), la caravane est à l'état plié, ainsi qu'il a été défini précédemment. De façon manuelle, avec ou sans assistance de moyens élastiques unidirectionnels ainsi qu'il sera décrit ultérieurement ou encore de façon motorisée : il est procédé au pivotement des deux panneaux supérieurs avant, arrière 8, 9, de leur position horizontale (figure 1a) jusqu'à la position verticale (figure 1c) en passant par les positions intermédiaires obliques requises (figure 1b). Grâce à la présence des moyens de liaison 27, les panneaux supérieurs avant et arrière 8, 9 sont déplacés en synchronisme et restent symétriques par rapport au plan de symétrie transversal Q. Il en résulte que le toit 12 reste horizontal non seulement dans les états plié et déplié de la caravane mais également dans toute situation intermédiaire (figure 1b). Une fois que, après un quart de tour, les panneaux avant et arrière 8, 9 sont placés verticalement dans le prolongement des panneaux inférieurs correspondants 5, 6, le toit 12 se trouvant alors dans sa position définitive de l'état déplié le plus écarté du caisson inférieur 3 (figure 1c) il est possible de faire pivoter les panneaux supérieurs latéraux 10, l'un après l'autre, d'un quart de tour, pour les faire passer de leur position horizontale à leur position verticale (figure 1d).

La cas échéant, l'aménagement intérieur 19 est mis en place de façon satisfaisante. En variante, l'aménagement 19 est conçu pour déployer automatiquement, simultanément au déploiement de la caravane, ainsi que cela est décrit dans le document EP-0 036 817.

A partir de cet état déplié, la caravane peut être ramenée à l'état plié par les mêmes opérations que décrites précédemment, effectuées dans l'ordre inverse. Ainsi, on rabat les panneaux supérieurs latéraux 10 l'un après l'autre de leur position verticale à leur position horizontale (figure 1e) puis on fait également pivoter les panneaux supérieurs avant et arrière 8, 9 de leur position verticale à leur position horizontale, le déplacement des panneaux 8, 9 étant synchrone et les panneaux 8, 9 restant alors symétriques par rapport au plan transversal de symétrie Q (figure 1f). Enfin, on laisse le toit 12 reposer sur le caisson inférieur 3 (figure 1g).

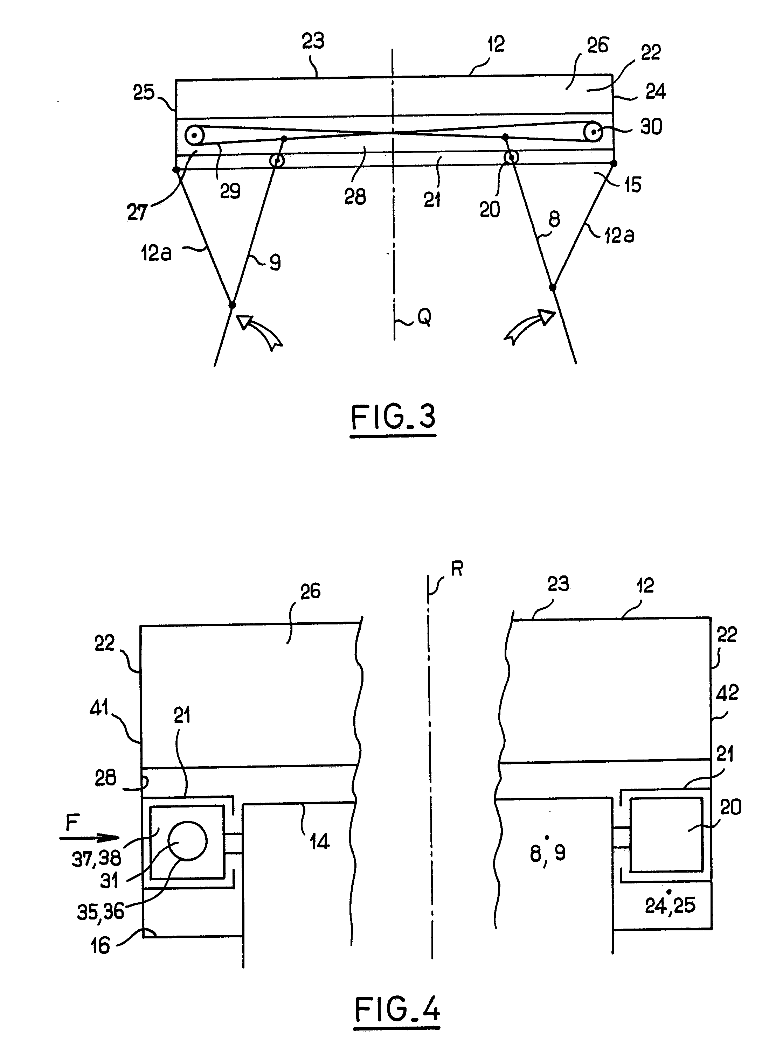

Dans une première variante de réalisation de l'invention et selon un premier mode d'exécution (figure 3) les moyens d'association mécaniques 13 du type à galets 20 et rails 21, ainsi qu'il a été décrit, et les moyens de liaison 27 sont distincts structurellement et fonctionnellement les uns des autres. Les moyens d'association mécaniques 13 assurent seulement la fonction de coulissement. Les moyens de liaison 27 assurent seulement la fonction de maintien du synchronisme de déplacement et de symétrie de position des panneaux 8, 9. Par exemple, dans cette variante de réalisation, les moyens de liaison 27 peuvent comprendre un ou plusieurs liens sans fin inextensibles (tels que chaînes, courroies, etc...) 29 tendus entre deux poulies d'extrémité 30 d'axes transversaux proches des faces tombantes avant et arrière 24, 25 du toit 12. Les panneaux supérieurs avant et arrière 8, 9 sont associés à deux brins du lien 29 se déplaçant en sens opposé. Par exemple, le lien 29 est tourné en forme de ∞ et les panneaux 8, 9 sont associés aux deux brins supérieurs ou préférentiellement inférieurs du lien 29 (cas de figure). Ou encore, le lien 29 est simplement tendu en forme de O renversé entre les deux poulies 30, un des panneaux 8, 9 étant associé à l'un des brins supérieurs ou inférieurs tandis que l'autre panneau 9, 8 est associé à l'autre brin inférieur ou supérieur. Dans cette première variante, les moyens de liaison 27 sont portés par le toit 12 en-dessous des meubles de rangement de toit 26 c'est-à-dire dans les zones libres 28 des faces tombantes 22, 24, 25. Et, par exemple, les moyens de liaison 27 sont placés juste au-dessus des moyens d'association mécaniques à coulissement 13 lesquels sont pratiquement adjacents à l'ouverture 16.

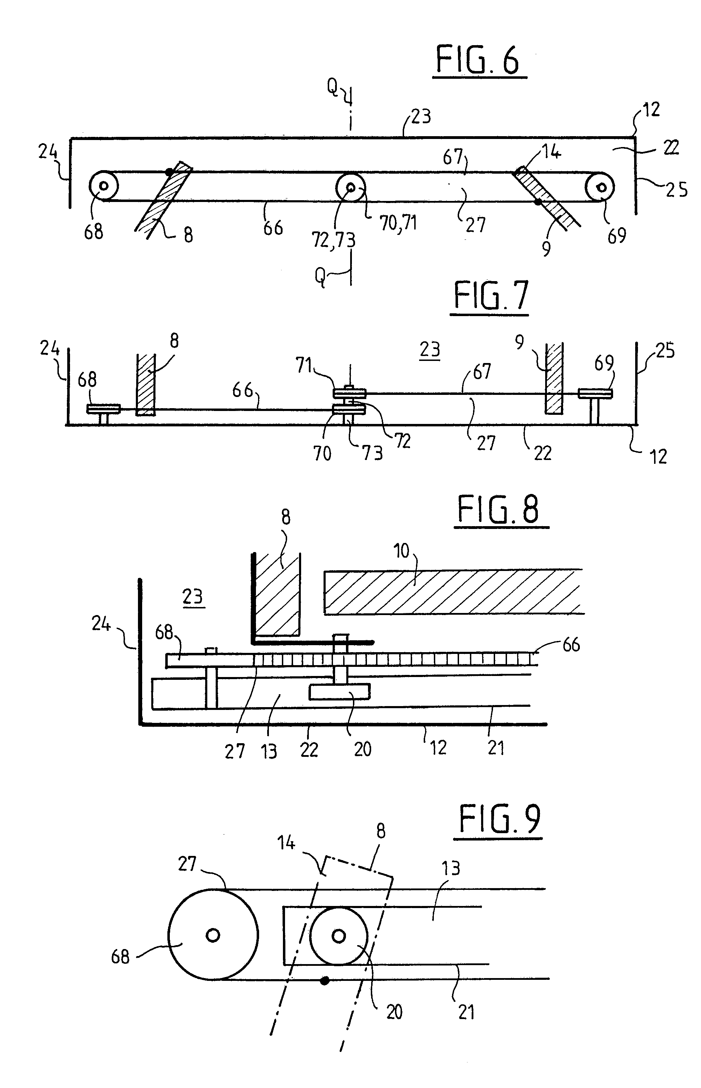

Selon la première variante de réalisation et un second mode d'exécution (figures 6 à 9), les moyens de liaison 27 comprennent au moins une paire de liens sans fin inextensibles, tels que chaînes, courroies ou équivalent, chacun des deux liens 66, 67 de la paire 27 étant associé solidement à un panneau supérieur, avant ou arrière 8, 9 pour permettre son entraînement et, tendu entre d'une part des pignons, poulies, galets d'extrémité et de renvoi 68, 69, d'axes transversaux, proches des faces tombantes avant et arrière 24, 25 du toit 12 et, d'autre part, des pignons, poulies, galets médians d'entraînement 70, 71, coaxiaux, sur un arbre 72 sur lequel ils sont calés en rotation, comportent une partie saillante 73 sur la face tombante latérale 22 du toit 12 à laquelle peuvent être associés des moyens moteurs, l'un des panneaux supérieur, avant ou arrière 8, 9 étant associé à l'un des deux brins supérieur ou inférieur de l'un des deux liens 66, 67 tandis que l'autre panneau arrière, avant 9, 8 est associé à l'autre des brins inférieur ou supérieur de l'autre des deux liens 67, 66.

De plus, l'arbre 72 est placé sensiblement dans le plan transversal de symétrie Q.

Les moyens moteurs pouvant être utilisés sont notamment ceux mentionnés ultérieurement : manuels ou non, directs ou avec transmission, à demeure ou amovibles, etc...

A la place de deux pignons, poulies, galets 70, 71 calés contre ou proches l'un de l'autre, on peut avoir aussi un pignon, poulie, galet à deux dentures ou gorges.

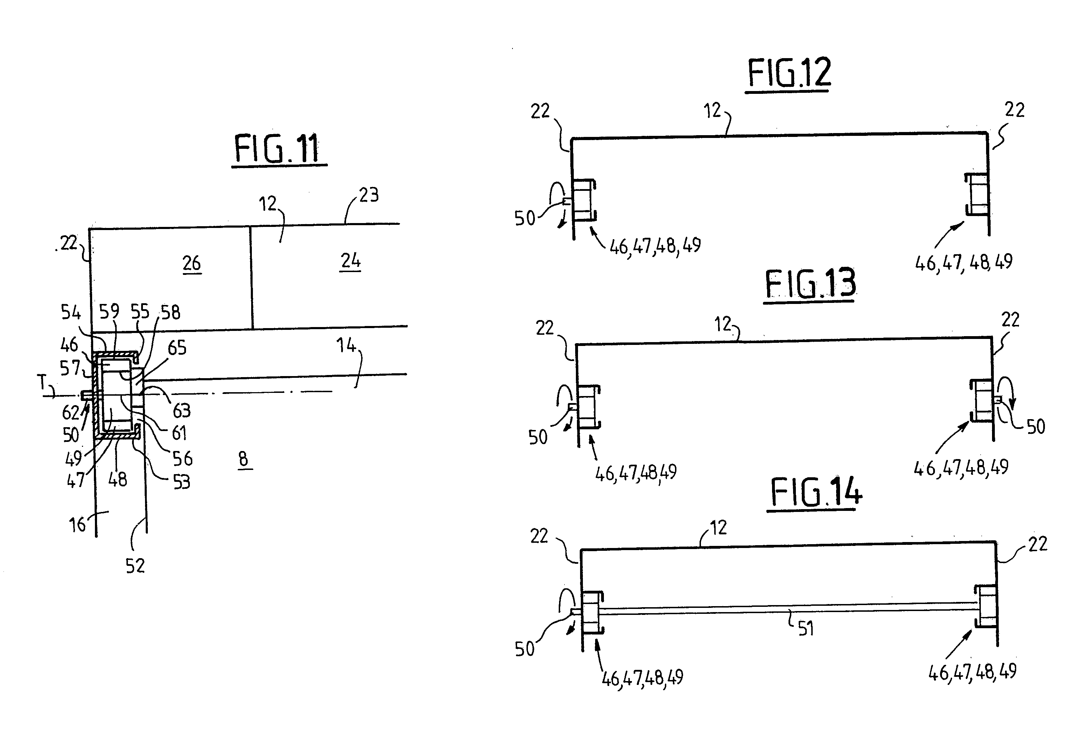

De même et conformément à ce qui a est décrit ultérieurement en relation avec les figures 12, 13, 14, la caravane peut comporter une seule paire de chaînes, courroies ou équivalent 66, 67 ou deux paires sur les deux faces latérales de la caravane. Et ces deux paires sont indépendantes ou non.

Selon ce second mode d'exécution, les brins supérieurs et inférieurs des moyens 27 sont parallèles entre eux (écartés de la valeur des pignons, poulies, galets 68, 69, 70, 71) au lieu de se croiser comme dans le premier mode d'exécution. De plus, chacune des chaînes, courroies ou équivalent 66, 67 est de plus courte longueur. Combiné au maintien central par les pignons, poulies, galets 70, 71, il s'ensuit, notamment, une meilleure maîtrise de la flèche des liens 66, 67.

Par ailleurs, ces brins des liens étant parallèles et écartés, il existe entre eux un espace libre dans lequel peuvent être logés les moyens d'association mécaniques 13, à galets 20 et rails 21. En variantes, ces moyens 13 sont placés au-dessus ou au-dessous des moyens de liaison 27.

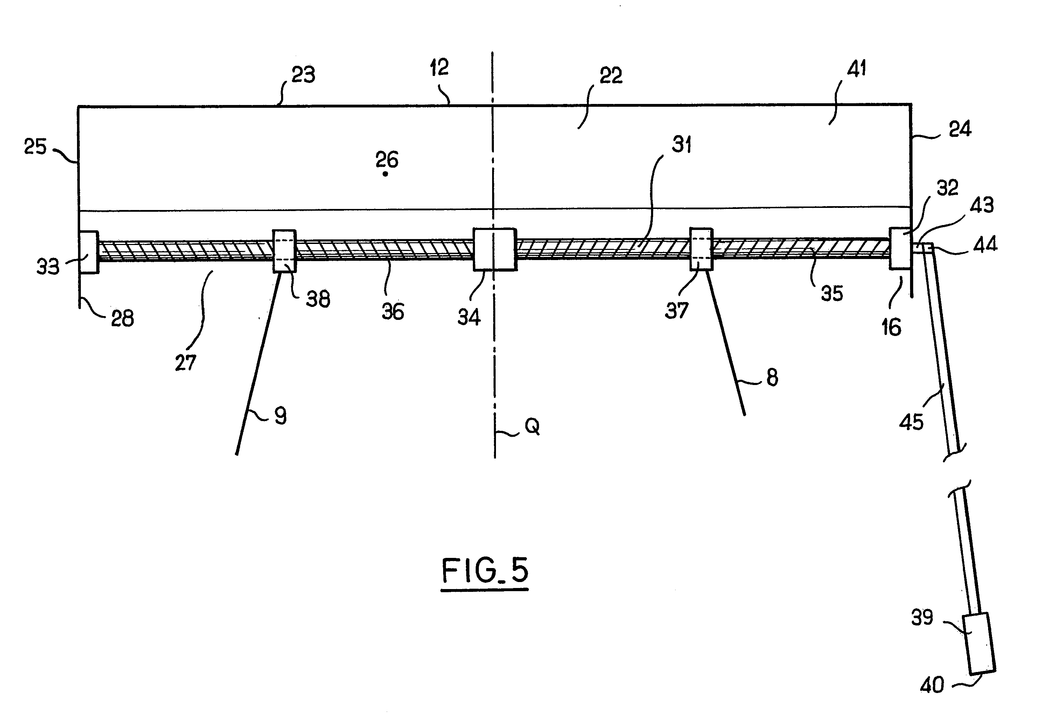

Dans une seconde variante de réalisation, les moyens d'association mécaniques à coulissement 13 et les moyens de liaison 27 forment un ou plusieurs ensembles combinés uniques de coulissement et de liaison. Par exemple selon un premier mode d'exécution (figures 4 et 5), il peut être prévu un ou plusieurs arbres filetés 31 placés horizontalement et longitudinalement, portés par des paliers 32, 33 des faces tombantes avant et arrière 24, 25 du toit 12 au voisinage de l'ouverture 16 et, éventuellement par un palier intermédiaire 34. L'arbre fileté 31 comporte sur ses deux moitiés axialement séparées deux filetages de directions opposées respectivement 35 et 36. Deux pièces 37, 38, taraudées, sont montées sur les filetages 35, 36 respectivement et sont agencées pour être empêchées de pivoter sur les filetages 35, 36. Par exemple, les pièces 37, 38 sont montées coulissant dans des rails tels que les rails 21. Les panneaux 8, 9 sont fixés aux pièces 37, 38 lesquels sont symétriques par rapport au plan vertical transversal de symétrie Q. On comprend, dans ces conditions, que le pivotement de l'arbre fileté 31 autour de son axe a comme conséquence le déplacement des pièces 37, 38 dans deux sens opposés l'un à l'autre, les deux pièces 37, 38 se déplaçant en synchronisme et restant symétriques l'une de l'autre par rapport au plan Q. Les pièces 37, 38 étant reliées aux panneaux 8, 9 il s'en suit également un déplacement synchrone et une position symétrique des panneaux 8, 9. Dans cette forme de réalisation, l'arbre fileté 31 porté par les paliers 32, 33, 34, comportant les filetages 35, 36 supportant les pièces 37, 38 elles-mêmes liées aux panneaux 8, 9 constituent, ensemble, à la fois des moyens d'association mécaniques à coulissement 13 et des moyens de liaison 27.

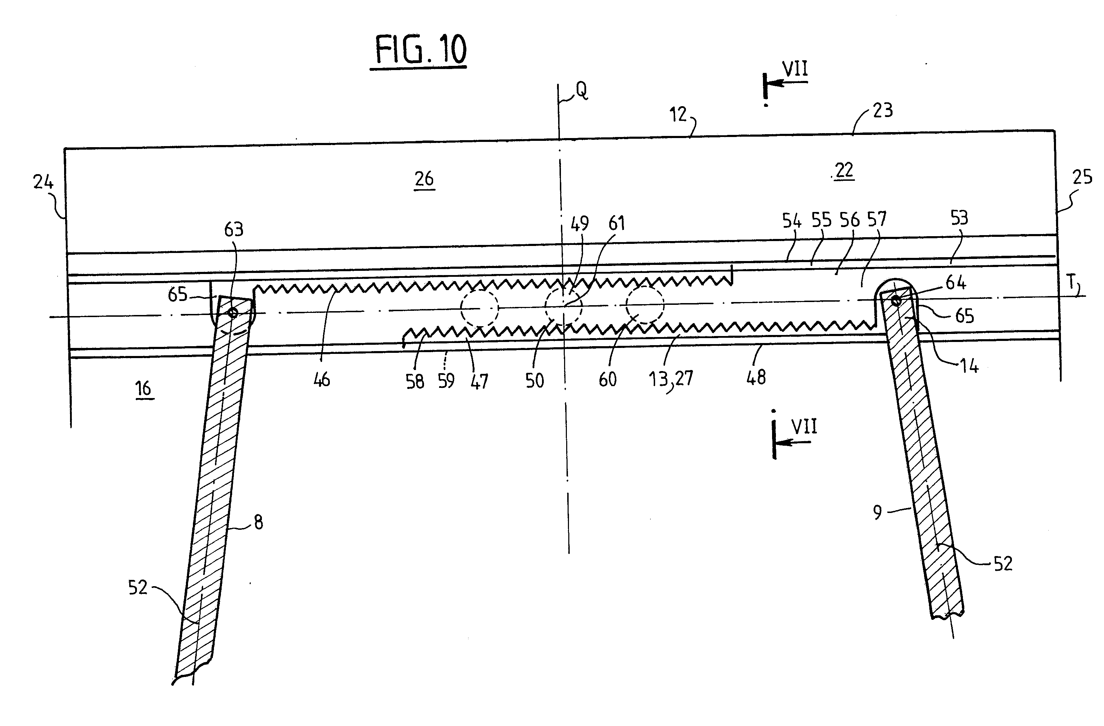

Selon un second mode d'exécution de cette seconde variante (figures 10 à 14), les moyens 13 et 27 comprennent au moins un ensemble composé, en premier lieu de deux crémaillères 46, 47 respectivement avant et arrière placées horizontalement et s'étendant longitudinalement, en regard et écartées l'une de l'autre, situées dans un même plan vertical, articulées respectivement aux panneaux supérieurs avant et arrière 8, 9 au voisinage de leurs bords horizontaux supérieurs 14 ; en deuxième lieu des moyens mécaniques 48 aptes à guider les deux crémaillères 46, 47 à coulissement ; en troisième lieu au moins un pignon d'entraînement denté 49, monté à pivotement sur la face tombante latérale 22 du toit 12 en prise permanente sur les deux crémaillères 46, 47 ; et en quatrième lieu des moyens d'entraînement 50 du pignon d'entraînement denté 49 donc des crémaillères 46, 47 et des panneaux supérieurs avant et arrière 8, 9.

Préférentiellement, un ensemble tel qu'il vient d'être décrit ne comporte qu'un seul pignon denté d'entraînement 49.

Préférentiellement, la caravane comporte deux ensembles semblables 46, 47, 48 49 sur les deux faces latérales de la caravane, en ce qui concerne les crémaillères 46, 47, les moyens de guidage 48, le pignon denté d'entraînement 49. Ces deux ensembles sont situés sur les deux faces tombantes latérales 22 respectivement. Cette symétrie des ensembles 46, 47, 48, 49 vise une meilleure répartition des efforts sur les panneaux 8, 9 et le toit 12. Les deux ensembles 46, 47, 48, 49 sont symétriques l'un de l'autre par rapport au plan médian longitudinal et vertical R. Pour ces raisons, seul un ensemble 46, 47, 48, 49 est représenté sur le dessin.

Dans une première variante possible, les deux ensembles 46, 47, 48, 49 sont indépendants l'un de l'autre. Dans ce cas, les moyens d'entraînement 50 du pignon denté 49 sont soit associés à l'un seulement des ensembles 46, 47, 48, 49 -l'ensemble moteur- l'autre ensemble -l'ensemble mené- en étant dépourvu ; soit associés en parallèle aux deux ensemble 46, 47, 48, 49. Dans ce dernier cas, les moyens d'entraînement des deux ensembles sont distincts en totalité ou seulement en partie, une partie commune existant entre eux.

Dans une seconde variante possible, les deux ensembles 46, 47, 48, 49 sont liés l'un à l'autre par des moyens de liaison mécaniques 51 reliant les deux pignons dentés 49.

Selon une autre caractéristique, les crémaillères 46, 47 ont une longueur et une position telles qu'elles sont en permanence en prise avec le pignon denté 49 et qu'à l'état plié de la caravane chacune d'elles n'interfère pas avec le panneau supérieur avant, arrière 8, 9 en regard. Par exemple, les crémaillères 46, 47 ont une longueur un peu supérieure à la moitié de la longueur de la caravane (écartement entre les panneaux supérieurs avant et arrière 8, 9 en position verticale lorsque la caravane est à l'état déplié) ; ou encore les crémaillères 46, 47 sont situées à côté des panneaux supérieurs avant et arrière 8, 9, c'est-à-dire à l'extérieur et à proximité de leurs chants latéraux verticaux 52.

Les moyens 48 aptes à guider les deux crémaillères 46, 47 à coulissement comprennent des organes formant glissière 53 fixés à la face tombante latérale 22 du toit 12 le long desquels glissent les deux crémaillères 46, 47, par l'extérieur. Par exemple, les organes formant glissière 53 peuvent être un seul et même rail ayant en section droite transversale un profil en U aplati dont les deux des ailes 54 comportent deux retours 55 dirigés vers l'un vers l'autre formant pour partie l'ouverture en U, ce rail en U étant renversé de 90° de manière que son âme 57 soit dans un plan vertical et s'étendant horizontalement, fixée à la face tombante latérale 22 par collage, soudage, vissage ou autre. Les crémaillères 46, 47 peuvent comporter un bord interne 58 pourvu des dents nécessaires et un bord externe 59, opposé agencé pour pouvoir glisser dans le rail. Le cas échéant ce bord externe 59 peut être pourvu de galets pour limiter la friction crémaillère 46, 47/rail 53. De tels organes formant glissière tels que le rail 53 contiennent les crémaillères 46, 47 en évitant qu'elles ne s'écartent pas de leur position normale.

Pour éviter que les crémaillères 46, 47 ne se rapprochent pas de leur position normale, les moyens 48 aptes à guider les crémaillères 46, 47 à coulissement comprennent au moins un pignon d'écartement 60 denté monté à pivotement sur la face tombante latérale 22 du toit 12 sur lequel les deux crémaillères 46, 47 venant en prise, ce pignon d'écartement 60 étant écarté du pignon d'entraînement 49. D'abord, il est clair que le pignon d'entraînement 50 joue déjà cette fonction d'écartement ou d'entretoise. Mais, s'il est jugé que le seul pignon d'entraînement 50 est insuffisant à lui seul pour cette fonction, on peut alors prévoir, ainsi qu'indiqué de tels pignons d'écartement 60.

Dans une forme de réalisation préférentielle, l'axe 61 du pignon denté d'entraînement 49 est placé dans ou au voisinage du plan médian vertical transversal Q. Dans ce cas, les deux crémaillères 46, 47 ont sensiblement même longueur. De plus, il peut être prévu deux ou plusieurs paires de pignons d'écartement 60 situés de part et d'autre du pignon d'entraînement 49.

En ce qui concerne les moyens d'entraînement 50, ils agissent sur le ou les pignons d'entraînement 49. Tous les moyens d'entraînement 50 aptes à réaliser un tel entraînement peuvent donc être envisagés, ainsi qu'il est décrit ultérieurement.

Dans une forme de réalisation préférentielle, applicable à la première comme à la seconde variante mentionnées précédemment, la caravane comporte, en combinaison, des moyens destinés à faciliter les mouvements de dépliage des organes constitutifs de la caravane. La présence de tels moyens est particulièrement souhaitée, dans une telle caravane, compte-tenu que, par rapport à une caravane de type pliante-rigide de l'état connu de la technique sans placards de pavillon, la caravane selon l'invention présente les spécificités suivantes : le toit 12 est en-soi un peu plus lourd puisque sa hauteur peut être plus importante que celle d'un toit de l'état connu de la technique pour permettre la fixation des meubles de rangement de toit 26 ; lors du mouvement de dépliage de la caravane, il y a lieu de supporter le poids des meubles de rangement de toit 26 ainsi que de leur contenu ; et, enfin lors du mouvement de dépliage, le toit 12 repose sur les panneaux avant et arrière 8, 9 alors que dans les caravanes de type pliante-rigide de l'état connu de la technique, le toit ne repose, lors du mouvement de dépliage, que sur un seul panneau supérieur avant ou arrière en mouvement.

Dans une première forme de réalisation préférentielle, les moyens destinés à faciliter les mouvements de dépliage sont des moyens sollicitant élastiquement le pivotement des panneaux supérieurs avant et/ou arrière 8, 9, dans le sens du dépliage de la caravane et de l'élévation du toit. Cette première forme de réalisation n'est pas représentée. De tels moyens sont plus spécialement des vérins à air comprimé interposés entre le caisson inférieur 3 et les panneaux avant et/ou arrière 8, 9. Ces vérins sont placés soit à l'extérieur de la caravane, soit à l'intérieur, soit encore dans l'épaisseur même de ses parois définies par les panneaux constituant la caravane. De tels vérins sont fixés à demeure ou, au contraire, sont amovibles. L'état connu de la technique enseignant des dispositions constructives pour le montage de tels vérins, il n'y a pas lieu de les décrire ici, l'homme du métier pouvant se référer à cet état de la technique (voir notamment document FR-2 284 480).

Dans une seconde forme de réalisation, les moyens destinés à faciliter les mouvements de dépliage sont des moyens assurant positivement le pivotement des panneaux supérieurs avant et/ou arrière 8, 9, dans le sens du dépliage de la caravane et donc l'élévation du toit 12. De tels moyens de motorisation peuvent agir soit directement sur les panneaux 8, 9 en étant interposés entre ceux-ci et le caisson inférieur 3, soit sur les moyens d'association mécaniques à coulissement 13, soit encore sur les moyens de liaison 27. Ainsi, si l'on se réfère à la première variante de la figure 3, les moyens de motorisation peuvent être associés aux liens 29 ou aux poulies 30 pour assurer leur déplacement dans le sens convenable. Si l'on se réfère à la seconde variante des figures 4 et 5, les moyens de motorisation peuvent agir sur l'arbre fileté 31 pour l'entraîner dans le sens convenable.

Dans une forme d'exécution possible, pouvant être combinée avec l'une ou/et l'autre des deux variantes ainsi que l'une et/ou l'autre des deux formes de réalisation précédemment décrites, la caravane comporte également, en combinaison, des moyens destinés à faciliter les mouvements de pliage de la caravane. De tels moyens peuvent être en effet souhaitables compte-tenu du poids du toit et des meubles de rangement 26 ainsi que de leur contenu et du fait que le toit repose sur les deux panneaux 8, 9 lors des manoeuvres de pliage.

Dans une première forme d'exécution possible, ces moyens sont constitués par des organes freinant élastiquement le pivotement des panneaux supérieurs avant et/ou arrière 8, 9 dans le sens du pliage de la caravane et de l'abaissement du toit 12. Dans une seconde forme d'exécution, ces moyens assurent positivement le pivotement des panneaux supérieurs avant et/ou arrière 8, 9 dans le sens du pliage de la caravane et l'abaissement du toit 12. Il va de soi que les moyens auxquels on se réfère ici peuvent être du même type général que ceux décrits dans la forme de réalisation préférentielle précédente en ce qui concerne les moyens destinés à faciliter les mouvements de dépliage. Mais, les moyens destinés à faciliter les mouvements de pliage fonctionnent, évidemment, dans le sens opposé aux moyens destinés à faciliter les mouvements de dépliage.

On comprend également que des mêmes moyens peuvent être actifs (positivement ou négativement) au pliage ou au dépliage. Tel est le cas des vérins pneumatiques notamment.

Les moyens moteurs dont il a été question en ce qui concerne la seconde forme de réalisation et la seconde forme d'exécution précédemment mentionnées peuvent faire l'objet de différentes conceptions. Dans une première conception possible, ces moyens sont totalement manuels. Ils consistent alors par exemple à permettre une démultiplication de l'effort manuel ainsi qu'une commodité d'application de cet effort. Par exemple, de tels moyens manuels comprennent une manivelle de commande située de manière à être accessible par l'utilisateur.

Dans une seconde conception possible, ces moyens comportent un ou plusieurs organes d'entraînement tels qu'un moteur notamment électrique 39 avec un organe de commande notamment manuel 40 (bouton-poussoir, levier, etc...).

On se réfère maintenant au second mode d'exécution de la seconde variante de réalisation (figures 10 à 14).

Les moyens d'entraînement 50 du pignon d'entraînement denté 49 comprennent alors un moteur électrique ou pneumatique auquel est associée une commande située à l'extérieur de la caravane. Ou, encore, les moyens d'entraînement 50 du pignon d'entraînement denté 49 comprennent un tronçon saillant 62 de son arbre d'axe 61 situé à l'extérieur de la caravane auquel peuvent être associés des organes d'entraînement. Ces organes d'entraînement sont manuels ou motorisés.

Selon une autre caractéristique, les deux axes 63, 64 d'articulation des deux crémaillères 46, 47 sont situés dans un même plan horizontal T passant par l'axe 61 du pignon denté d'entraînement 49, le cas échéant l'axe d'un pignon d'écartement 60. A cet effet, par exemple, l'axe d'articulation 63, 64 d'une crémaillère 46, 47 est porté par une patte 65 fixée rigidement à la crémaillère 46, 47, située dans un plan vertical longitudinal et dirigée vers le plan horizontal T passant par l'axe du pignon denté d'entraînement.

Par ailleurs, toujours en ce qui concerne ces moyens moteurs et pour l'une comme pour l'autre des conceptions possibles précédemment décrites, il peut être prévu soit une première réalisation dans laquelle les moyens moteurs sont fixes, c'est-à-dire portés à demeure par la caravane, soit une seconde réalisation dans laquelle ils sont amovibles c'est-à-dire enlevés de la caravane lorsqu'ils sont inutilisés.

En combinaison avec les première et seconde conceptions ainsi que les première et seconde réalisations précédemment décrites, les moyens moteurs peuvent également faire l'objet d'une première exécution dans laquelle ils sont situés plutôt en partie haute de la caravane, notamment associés au toit 12 ou une seconde exécution dans laquelle ils sont situés plutôt en partie basse de la caravane notamment au voisinage du plan P.

Enfin, en combinaison avec les première et seconde conceptions, première et seconde réalisations, première et seconde exécutions précédemment mentionnées, les moyens moteurs peuvent encore faire l'objet d'une première variante dans laquelle ils sont à fonctionnement unidirectionnel ainsi qu'une seconde variante dans laquelle ils sont à fonctionnement bidirectionnel ou réversibles. Dans la première variante, les moyens moteurs n'assurent que l'assistance au dépliage ou au pliage. Et, si une assistance est souhaitée au pliage et au dépliage, deux moyens moteurs distincts sont prévus. Au contraire, dans la seconde variante, les mêmes moyens peuvent fonctionner pour faciliter le pliage et le dépliage, et ce simplement selon le sens de leur fonctionnement, ce sens pouvant être commandé par l'organe de commande 40 lequel a deux positions de fonctionnement, en plus de la position d'arrêt.

Enfin, il va de soi que les différentes variantes, formes de réalisation, formes d'exécution, conceptions, réalisations, exécutions, précédemment décrites peuvent être combinées, pour autant que cela soit possible, les unes avec les autres.

On se réfère maintenant plus spécifiquement aux figures 4 et 5 qui illustrent une possibilité d'une telle combinaison, cette possibilité n'étant nullement limitative et simplement donnée à titre indicatif.

Dans ce cas, il est prévu un ensemble combiné d'association mécanique à coulissement et de moyens de liaison 13, 27 du type à arbre fileté 31, paliers 32, 33, 34, filetages 35, 36, et pièces 37, 38 montées dans un rail 21. Cet ensemble est situé par exemple sur l'une des faces latérales de la caravane à savoir la face 41 (figure 4). Sur l'autre face latérale de la caravane, 42, il peut être prévu, seulement, des moyens classiques d'association mécaniques à coulissement 13 du type à galet 20 et rail 21. L'arbre fileté 31 est conçu pour être saillant à l'extérieur de la caravane sur l'une des faces tombantes avant ou arrière 24, 25 et préférentiellement sur la face tombante avant 24. Cette partie saillante est référencée 43. Sur la partie saillante 43 peut être montée une articulation de type cardan 44 ou équivalent apte à renvoyer le mouvement de l'arbre 31 autour de son axe dans le sens vertical notamment à une perche amovible 45 fixée de façon amovible à l'articulation 44 en partie haute. En partie basse, la perche 45 est pourvue d'un moteur 39 à organe de commande manuel 40. Un tel moteur associé à une telle perche permettant de transmettre le mouvement elle-même associée à une articulation est connu de l'homme du métier notamment dans le domaine technique de la commande des volets roulants ou autre. Pour cette raison, il n'est pas nécessaire de décrire plus en détail la réalisation de ces éléments. Dans la réalisation qui vient d'être décrite, on comprend que la caravane n'est pas parfaitement symétrique par rapport à un plan médian longitudinal et vertical R (figure 4) mais, au contraire, présente une dissymétrie. En effet, sur ses faces latérales la caravane comporte des moyens d'entraînement ce qui n'est pas le cas sur l'autre face opposée. C'est pourquoi il peut être alors prévu l'un ou/et l'autre des deux perfectionnements suivants : d'une part un ou des renforcements des panneaux supérieurs avant et/ou arrière 8, 9 aptes à éviter la gauchissement de ces panneaux résultant de l'action localisée d'entraînement. De tels renforcements peuvent être constitués par des nervures, des longerons, etc... à la portée de l'homme du métier cherchant à réaliser des panneaux tels que ceux utilisés dans de telles caravanes. D'autre part, il peut être prévu des organes élastiques unidirectionnels, notamment facilitant le dépliage, situés sur la face 42 de la caravane dépourvue de moyens d'entraînement et opposée à la face 41 pourvue de moyens d'entraînement.

**Revendications**

1. Caravane de type pliante-rigide, comprenant un châssis pourvu de roues (1) et d'un attelage (2) ; un caisson inférieur (3) ouvert vers le haut (15) fixé au châssis, constitué d'un plancher (4) et de quatre panneaux verticaux et inférieurs, respectivement avant (5), arrière (6) et latéraux (7) ; quatre panneaux supérieurs, respectivement avant (8); arrière (9) et latéraux (10) articulés (11) à pivotement par leurs bords horizontaux inférieurs aux bords horizontaux supérieurs libres respectifs des panneaux inférieurs (5, 6, 7) ; et un toit (12) formant un caisson supérieur aplati ouvert (16) vers le bas associé, en permanence grâce à des moyens (13) d'association mécaniques, à coulissement aux bords horizontaux supérieurs (14) des panneaux supérieurs avant et arrière (8, 9), de manière que le toit (12) soit supporté et déplacé grâce aux dits panneaux supérieurs avant et arrière (8, 9), caractérisée par le fait qu'en combinaison d'une part un ou des meubles de rangement de toit (26) sont fixés rigidiement au toit (12) et, d'autre part, des moyens de liaison (27) relient les deux panneaux supérieurs avant et arrière (8, 9) pour assurer et maintenir en permanence en premier lieu leur déplacement synchrone et en second lieu leur symétrie par rapport à un plan médian vertical transversal Q, ce qui a pour effet qu'avec une caravane de ce type les meubles de rangement de toit (26) sont en permanence horizontaux que la caravane soit dépliée ou pliée ou dans toute situation intermédiaire et pour avantage d'éviter que le contenu de ces meubles (26) ne soit renversé, déplacé, cassé, sans la nécessité de moyens spécifiques de maintien du contenu.

2. Caravane selon la revendication 1, caractérisée par le fait que d'une part les moyens (13) d'association mécaniques à coulissement assurent seulement cette fonction de coulissement et comprennent un ou des rails de guidage (21) solidaires du toit (12) avec lesquels coopèrent un ou des galets (20) ou équivalents portés par les panneaux supérieurs avant et/ou arrière (8, 9) ; et, d'autre part, les moyens de liaison (27) sont distincts des moyens d'association mécaniques (13) et assurent seulement cette fonction de maintien du synchronisme de déplacement et de symétrie de position.

3. Caravane selon la revendication 1, caractérisée par le fait que les moyens d'association mécaniques à coulissement (13) et les moyens de liaison (27) forment un ou plusieurs ensembles combinés uniques de coulissement et liaison.

4. Caravane selon l'une quelconque des revendications 1 à 3, caractérisée par le fait qu'elle comporte, en combinaison, des moyens destinés à faciliter les mouvements de dépliage à savoir des moyens assurant positivement ou sollicitant élastiquement le pivotement des panneaux supérieurs avant et/ou arrière (8, 9) dans le sens du dépliage de la caravane et l'élévation du toit (12).

5. Caravane selon l'une quelconque des revendications 1 à 4, caractérisé par le fait qu'elle comporte, en combinaison, des moyens destinés à faciliter les mouvements de dépliage à savoir des moyens assurant positivement ou freinant élastiquement le pivotement des panneaux supérieurs avant et/ou arrière (8, 9) dans le sens du pliage de la caravane et l'abaissement du toit (12).

6. Caravane selon l'une quelconque des revendications 1 et 3, caractérisée par le fait que l'ensemble de coulissement et de liaison (13, 27) comprend au moins un arbre fileté (31) à deux filetages (35, 36) en sens opposés porté par le toit (12) et deux pièces (37, 38) bloquées en rotation portées par les panneaux avant et arrière (8, 9) et coopérant avec les deux filetages (35, 36).

7. Caravane selon l'une quelconque des revendications 1, 3 à 6, caractérisée par le fait qu'elle comporte un moteur d'entraînement (39) au moins unidirectionnel associé à l'arbre (31) pour assurer son pivotement, un organe de commande (40) étant associé au moteur.

8. Caravane selon la revendication 7, caractérisée par le fait qu'elle comporte un ou des moteurs d'entraînement réversibles (39).

9. Caravane selon l'une quelconque des revendications 7, 8, caractérisée par le fait que l'arbre (31) comporte uen partie saillante (43), à laquelle est associé le moteur (39).

10. Caravane selon l'une quelconque des revendications 7, 9, caractérisée par le fait qu'à la partie saillante 43 est associée une articulation (44) à laquelle est associée une perche (45) en partie basse de laquelle se trouve le moteur (39).

11. Caravane selon l'une quelconque des revendications 7 à 10, caractérisée par la fait que le moteur d'entraînement (39) est en partie haute de la caravane, notamment par le toit ou en partie basse.

12. Caravane selon l'une quelconque des revendications 7 à 11, caractérisée par le fait que le moteur d'entraînement (39) est fixe ou est amovible.

13. Caravane selon l'une quelconque des revendications 7 à 12, caractérisée par le fait que les moyens positifs d'entraînement sont à fonctionnement manuel.

14. Caravane selon l'une quelconque des revendications 4, 5, caractérisée par le fait que les moyens élastiques unidirectionnels sont des vérins à air comprimé notamment interposés entre le caisson (3) et les panneaux (8) et/ou (9).

15. Caravane selon l'une quelconque des revendications 1 à 14, caractérisée par le fait qu'elle présente une dissymétrie par un plan longitudinal médian R, comportant sur une face seulement (41) des moyens de liaison (27).

16. Caravane selon la revendication 15, caractérisée par le fait que ses panneaux avant et/ou arrière (8, 9) comportent un ou des renforcements aptes à éviter leur gauchissement.

17. Caravane selon l'une quelconque des revendications 15, 16, caractérisée par le fait que les moyens élastiques unidirectionnels sont situés sur l'une des faces seulement (42) dépourvue de moyens de liaison (27).

18. Caravane selon l'une quelconque des revendications 1 et 3, caractérisée par le fait que les moyens d'association mécaniques à coulissement et les moyens de liaison (13, 27), combinés, comprennent au moins un ensemble composé en premier lieu de deux crémaillères respectivement avant et arrière (46, 47) placées horizontalement et s'étendant longitudinalement, en regard et écartées l'une de l'autre, situées dans un même plan vertical, articulées respectivement aux panneaux supérieurs avant et vertical, (8, 9) au voisinage de leurs bords horizontaux supérieurs (14) ; en deuxième lieu des moyens mécaniques (48) aptes à guider les deux crémaillères (46, 47) à coulissement ; en troisième lieu au moins un pignon d'entraînement denté (49), monté à pivotement sur la face tombante latérale (22) du toit (12) en prise permanente sur les deux crémaillères (46, 47) ; et en quatrième lieu des moyens d'entraînement (50) du pignon d'entraînement denté (49) donc des crémaillères (46, 47) et des panneaux supérieurs avant et arrière (8, 9).

19. Caravane selon la revendication 18, caractérisée par le fait qu'elle comporte deux ensembles semblables (46, 47, 48, 49) sur les deux faces latérales de la caravane.

20. Caravane selon l'une quelconque des revendications 18, 19, caractérisée par le fait que les deux ensembles (46, 47, 48, 49) sont indépendants l'un de l'autre.

21. Caravane selon l'une quelconque des revendications 18 à 20, caractérisée par le fait que les moyens d'entraînement (50) du pignon denté (49) sont soit associés à l'un seulement des ensembles (46, 47, 48, 49) -l'ensemble moteur- l'autre ensemble -l'ensemble mené- en étant dépourvu ; soit associés en parallèle aux deux ensembles (46, 47, 48, 49).

22. Caravane selon l'une quelconque des revendications 18, 19, caractérisée par le fait que les deux ensembles (46, 47, 48, 49) sont liés l'un à l'autre par des moyens de liaison mécaniques (51) reliant les deux pignons dentés (49).

23. Caravane selon l'une quelconque des revendications 18 à 22, caractérisée par le fait que les crémaillères (46, 47) ont une longueur et une position telles qu'elles sont en permanence en prise avec le pignon denté (49) et qu'à l'état plié de la caravane chacune d'elles n'interfère pas avec le panneau supérieur avant, arrière (8, 9) en regard.

24. Caravane selon l'une quelconque des revendications 18 à 23, caractérisée par le fait que les moyens (48) aptes à guider les deux crémaillères (46, 47) à coulissement comprennent des organes formant glissière (53) fixés à la face tombante latérale (22) du toit (12) le long desquels glissent les deux crémaillères (46, 47) par l'extérieur.

25. Caravane selon l'une quelconque des revendications 18 à 24, caractérisée par le fait que les moyens (48) aptes à guider les deux crémaillères (46, 47) à coulissement comprennent au moins un pignon d'écartement (60) denté monté à pivotement sur la face tombante latérale (22) du toit (12), sur lequel les deux crémaillères (46, 47) viennent en prise, ce pignon d'écartement (60) étant écarté du pignon d'entraînement (49).

26. Caravane selon l'une quelconque des revendications 18 à 25, caractérisée par le fait que l'axe (61) du pignon denté d'entraînement (49) est placé dans ou au voisinage du plan médian vertical transversal Q.

27. Caravane selon l'une quelconque des revendications 18 à 26, caractérisée par le fait qu'elle comporte deux ou plusieurs paires de pignons d'écartement (60) situés de part et d'autre du pignon d'entraînement (49).

28. Caravane selon l'une quelconque des revendications 18 à 27, caractérisée par le fait que les moyens d'entraînement (50) du pignon d'entraînement denté (49) comprennent un moteur électrique ou pneumatique auquel est associée une commande située à l'extérieur de la caravane.

29. Caravane selon l'une quelconque des revendications 18 à 27, caractérisée par le fait que les moyens d'entraînement (50) du pignon d'entraînement denté (49) comprennent un tronçon saillant (62) de son arbre d'axe (61) situé à l'extérieur de la caravane auquel peuvent être associés des organes d'entraînement.

30. Caravane selon l'une quelconque des revendications 18 à 29, caractérisée par le fait que les deux axes (63, 64) d'articulation des deux crémaillères (46, 47) sont situés dans un même plan horizontal T passant par l'axe (61) du pignon denté d'entraînement (49), le cas échéant l'axe d'un pignon d'écartement (60).

31. Caravane selon la revendication 30, caractérisée par le fait que l'axe d'articulation (63, 64) d'une crémaillère (46, 47) est porté par une patte (65) fixée rigidement à la crémaillère (46, 47), située dans un plan vertical longitudinal et dirigée vers le plan horizontal T passant par l'axe du pignon denté d'entraînement.

32. Caravane selon l'une quelconque des revendications 1 et 2, caractérisée par le fait que les moyens de liaison (27) comprennent au moins une paire de liens sans fin inextensibles, tels que chaînes, courroies ou équivalent, chacun des deux liens (66, 67) de la paire (27) étant associé solidement à un panneau supérieur, avant ou arrière (8, 9) pour permettre son entraînement et, tendu entre d'une part des pignons, poulies, galets d'extrémité et de renvoi (68, 69), d'axes transversaux, proches des faces tombantes avant et arrière (24, 25) du toit (12) et, d'autre part, des pignons, poulies, galets médians d'entraînement (70, 71), coaxiaux, sur un arbre (72) sur lequel ils sont calés en rotation, comportent une partie saillante (73) sur la face tombante latérale (22) du toit (12) à laquelle peuvent être associés des moyens moteurs, l'un des panneaux supérieur, avant ou arrière (8, 9) étant associé à l'un des deux brins supérieur ou inférieur de l'un des deux liens (66, 67) tandis que l'autre panneau arrière, avant (9, 8) est associé à l'autre des brins inférieur ou supérieur de l'autre des deux liens (67, 66).

33. Caravane selon la revendication 32, caractérisée par le fait que l'arbre (72) est placé sensiblement dans le plan transversal de symétrie Q.

34. Caravane selon l'une quelconque des revendications 32, 33, caractérisée par le fait que les moyens d'association mécaniques (13), du type à galets (20) et rails (21) sont placés au dessus des moyens de liaison (27), ou en-dessous, ou encore entre les brins supérieur et inférieur de ceux-ci.

FIG.1A

FIG.1B

FIG.1C

FIG.1D

FIG.1E

FIG.1F

FIG.1G

FIG_2

FIG.3

FIG.4

FIG.5

EP 0 356 295 A1

## FIG. 6

## FIG. 7

## FIG. 8

## FIG. 9

# FIG.10

EP 0 356 295 A1

FIG.11

FIG.12

FIG.13

FIG.14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 206 902  (ROUSSEAU)<br>* Revendications 1,2; figure 1 *<br>--- | 1-3,6-8 | B 60 P    3/355 |
| D,Y | FR-A-2 412 440  (PETIT)<br>* Revendications 1,3,7; page 6, lignes 9-19; figure 1 * | 1-3,6-8 | |
| A | | 18,19, 32 | |
| D,A | FR-A-2 509 674  (DURAND)<br>* En entier *<br>--- | 1,3,4,7 ,8,13 | |
| D,A | US-A-4 448 453  (COACHMEN)<br>* Résumé * | 1,3,6,7 ,11,12, 13,18, 19 | |
| D,A | FR-A-2 256 055  (DEVILLE)<br>* Revendication 1 * | 1,4,14 | |

DOMAINES TECHNIQUES
RECHERCHES (Int. Cl.5)

B 60 P

Le présent rapport a été établi pour toutes les revendications

| Lieu de la recherche | Date d'achèvement de la recherche | Examinateur |
|---|---|---|
| LA HAYE | 23-11-1989 | VANNESTE M.A.R. |